# EUROPÄISCHE PATENTSCHRIFT

(11) **EP 3 224 119 B1**
(45) Veröffentlichungstag und Bekanntmachung des Hinweises auf die Patenterteilung: **26.06.2019**
(21) Anmeldenummer: 15775470.6
(22) Anmeldetag: 09.10.2015
(51) Int. Cl.: B62D 21/11, B62D 29/00, B60G 7/00, B29C 70/74, B29C 70/78

(54) **VERFAHREN ZUM VERSTÄRKEN EINES BAUELEMENTS EINES KRAFTFAHRZEUG-FAHRWERKS**
METHOD FOR REINFORCING A COMPONENT OF A MOTOR VEHICLE CHASSIS
PROCÉDÉ DE RENFORCEMENT D'UN COMPOSANT D'UN CHÂSSIS D'UN VÉHICULE AUTOMOBILE

(30) Priorität: 28.11.2014 DE 102014224429
(43) Veröffentlichungstag der Anmeldung: 04.10.2017
(73) Patentinhaber: Bayerische Motoren Werke Aktiengesellschaft, 80809 München (DE)
(72) Erfinder: TENHAEFF, Katja, 81373 München (DE); KEIGLER, Michael, 80807 München (DE); KELLER, David, 80638 München (DE)
(86) Internationale Anmeldenummer: PCT/EP2015/073418
(87) Internationale Veröffentlichungsnummer: WO 2016/083007

(56) Entgegenhaltungen:
- EP-A1- 1 724 132
- WO-A1-2012/076072
- DE-A1- 10 017 205
- DE-A1-102012 010 552
- DE-A1-102012 203 888
- DE-A1-102013 001 040
- DE-A1-102014 005 010
- JP-A- 2002 070 327
- US-A1- 2012 280 534
- US-A1- 2013 106 138
- US-A1- 2013 154 310

## Beschreibung

Die Erfindung betrifft ein Verfahren zum Verstärken eines Bauelements eines Kraftfahrzeug-Fahrwerks nach dem Oberbegriff des Anspruchs 1.

In Kraftfahrzeugen nach dem Stand der Technik werden Fahrwerkskomponenten hauptsächlich aus metallischen Werkstoffen gefertigt. Dabei kommen vor allem ur- und umformende Verfahren zum Einsatz. Dabei werden die Komponenten zum Teil für jeden Fahrzeug-Typ eigens konstruiert und angepasst. Daneben werden aber auch sog. Baukästen verwendet, wobei gleiche Bauelemente für unterschiedliche Fahrzeug-Typen zum Einsatz kommen. Ist somit ein gewisser Baukasten vorgegeben, so können mehrere Fahrzeug-Derivate oder Typen, deren Fahrwerks-Komponenten im Wesentlichen gleiche geometrische Abmessungen besitzen, mit einem einzigen gleichen Bauelement abgedeckt werden. Da sich die verschiedenen Fahrzeug-Typen oder Derivate üblicherweise hinsichtlich ihrer Antriebsleistung und/oder ihres Gewichts unterscheiden, ist es erforderlich, diese gleichen Bauteile hinsichtlich ihrer Verwendung in demjenigen Fahrzeug-Typ auszulegen, welcher zur höchsten Belastung des Bauelements führt. Üblicherweise ist dies ein Derivat mit höherer Antriebsleistung und/oder höherem Gewicht. Als Folge ist dessen ist die jeweilige Komponente bzw. das besagte gleiche Bauelement für ein anderes Fahrzeug-Derivat (mit geringerer Antriebsleistung und/oder geringerem Gewicht) überdimensioniert. Letzteres ist beispielsweise aus Gewichts-Gründen unerwünscht.

Ferner sind verschiedene Verfahren zum Fertigen von Fahrwerks-Komponenten aus Faserverbund-Werkstoffen bzw. faserverstärktem Kunststoff bekannt. Diese Verfahren bieten die Möglichkeit, leichtere Komponenten herzustellen, welche jedoch zumindest bislang aufgrund begrenzter Festigkeit, fehlendem plastischen Verhalten und der hohen Kosten nicht flächendeckend im Fahrwerksbereich eingesetzt werden. Aus der DE 100 17 205 A1 ist es weiterhin bekannt, ein metallisches Fahrwerks-Bauteil zu verstärken, indem Carbonfasern durch Ultraschallschweißen in den Metall-Werkstoff eingearbeitet werden. In eine ähnliche Richtung geht die EP 1 724 132 A1, wonach ein Metallgewebe auf eine Metallkomponente einer Fahrzeug-Achse aufgeklebt oder durch Punktschweißverkleben aufgebracht wird. Schließlich ist es für eine Karosserie-Bauteil eines Fahrzeugs, nämlich für dessen B-Säule bekannt, ein Verstärkungselement aus mehreren Lagen eines Faserverbundwerkstoffs vorzuformen, welches danach auf das metallische Karosserieteil aufgelegt und gehärtet wird, wobei eine Klebeverbindung zwischen dem Verstärkungselement und dem metallischen Karosserieteil hergestellt wird.

Zurückkommend auf Fahrwerkskomponenten, an deren Festigkeit üblicherweise hohe Anforderungen gestellt werden, entstehen bei einer gesonderten Fertigung im Gegensatz zur Verwendung von Baukastensystemen entstehen hohe Kosten für die Konstruktion, Planung, Anschaffung der Produktionsmittel und die anschließende Logistik. Beim Einsatz von Baukästen hingegen kommt es oftmals zu der beschriebenen Überdimensionierung, was zu einem wünschenswerterweise zu vermeidenden Materialverbrauch und zu einer Gewichtserhöhung führt. Ferner ist zu beachten, dass bei der Fertigung von Metall- wie auch Kunststoff-Bauteilen Änderungen in späten Entwicklungsphasen oder kurz vor einem Serienproduktionsablauf nur sehr schwer und unter hohen Kosten vorgenommen werden können. Vor allem bei tendenziell für große Stückzahlen kostengünstigen umformenden Fertigungsverfahren lassen sich nur mit hohem Aufwand gezielt Verstärkungen von Lastwegen im Bauteil einbringen.

Es ist Aufgabe vorliegender Erfindung, ein Verfahren zum Verstärken einer Fahrzeug-Fahrwerks-Komponente anzugeben, welche kostengünstig in Herstellung Herstellung und Montage ist und dauerfest betrieben werden kann. Insbesondere soll dabei der Konflikt aus kostengünstiger Herstellung, Leichtbau und Steifigkeit gelöst werden. Die Lösung der Aufgabe erfolgt durch die Merkmale des unabhängigen Anspruchs, die abhängigen Ansprüche haben vorteilhafte Ausgestaltungen der Erfindung zum Gegenstand.

An einem Fahrwerk eines Kraftfahrzeugs, welches Bauelemente oder Profilbauteile aus Metall umfasst, die Kräfte aufnehmen oder weiterleiten, können somit abschnittsweise auf die Bauelement-Oberfläche aufgebrachte Verstärkungselemente vorgesehen sein, die aus faserverstärktem Kunststoff bestehen. Beispielsweise umfasst das Fahrwerk einen Achsträger. Der Achsträger wiederum umfasst einen Längsträger. Der Längsträger kann aus einem oder mehreren Profilbauteilen aus Metall bestehen bzw. zusammengesetzt sein. Diese einzelnen Profilbauteile bzw. sog. Bauelemente können beispielsweise bei einem Längsträger rohr- oder schalenförmige Metallteile sein, die zum Längsträger zusammen verschweißt oder geschraubt sind. Im Rahmen der Erfindung ist vorgesehen, dass auf zumindest einem entsprechenden Bauelement oder Profilbauteil des Fahrwerks ein flächiges Verstärkungselement aus faserverstärktem Kunststoff aufgebracht wird, soweit dies aus Festigkeitsgründen ist - hierauf wird im Folgenden noch näher eingegangen. Dieses Aufbringen erfolgt durch thermisches Fügen mit einem gewissen Anpressdruck.

Es können aber auch andere metallische Bauelemente im Fahrwerk eines Kraftfahrzeugs entsprechend gestaltet, d.h. auf ihrer Oberfläche lokal mit zumindest einem Verstärkungselement aus faserverstärktem Kunststoff versehen werden, welches insbesondere im Bereich eines oder längs eines sog. Lastpfades durch thermisches Fügen aufgebracht ist. Der Begriff des Lastpfades ist dem Ingenieur bekannt. Erfindungsgemäß mittels eines Verstärkungselements verstärkte metallische (und Kräfte aufnehmende bzw. weiterleitende) Bauelemente können einen offenen oder geschlossenen Querschnitt aufweisen. Außen am geschlossenen Querschnitt oder auch innen bei den offenen Querschnitten können Verstärkungselemente aus faserverstärktem Kunststoff aufgesetzt werden. Durch solche Verstärkungselemente können insbesondere die Festigkeit und Steifigkeit, aber auch das akustische Verhalten und das Schwingungsverhalten des jeweiligen Bauelements bzw. Profilbauteils in gewünschter Weise angepasst werden.

Das Aufbringen solcher Verstärkungselemente ist im Herstellungsprozess des Fahrwerks relativ kostengünstig. Die kostenintensiven Werkzeuge, insbesondere für die umgeformten Metallteile eines Fahrwerks eines gesamten Baukastens können dabei unverändert bleiben. Damit ist es insbesondere einfach möglich, ein besagtes Bauelement, welches vorgesehen ist, mit gleichen geometrischen Abmessungen an hinsichtlich ihres Gewichts und/oder ihrer Antriebsleistung unterschiedlichen Kraftfahrzeug-Typen verbaut zu werden, bei Verwendung in einem Kraftfahrzeug-Typ mit höherem Gewicht und/oder höherer Antriebsleistung auf zumindest einem einen Lastpfad bildenden Oberflächen-Abschnitt erdfindungsgemäß mit ein Verstärkungselement zu versehen, welches Verstärkungselement bei einem anderen Kraftfahrzeug-Typ mit geringerem Gewicht und/oder geringerer Antriebsleistung am besagten Bauelement nicht vorgesehen ist. Im Übrigen können an unterschiedlichen Fahrzeug-Typen auch unterschiedlich (hinsichtlich Höhe bzw. Dicke oder Breite oder Länge) dimensionierte Verstärkungselemente aufgebracht werden.

Ein Fahrwerks-Achsträger als erfindungsgemäß verstärktes Bauelement kann zwei Längsträger aufweisen, die über zumindest einen Querträger miteinander verbunden sind. Die Längsträger und der zumindest eine Querträger sind jeweils aus einem oder aus mehreren Profilbauteilen aus Metall (= besagte metallische Bauelemente) zusammengesetzt. Zumindest auf einem der Profilbauteile bzw. Bauelemente befindet sich ein erfindungsgemäß durch thermisches Fügen aufgebrachtes und aus faserverstärktem Kunststoff bestehendes Verstärkungselement. Beispielsweise kann annähernd über die gesamte Länge des zumindest einen Querträgers ein solches Verstärkungselement aufgesetzt sein. Dieses Aufsetzen oder thermische Fügen wird auch als thermisches Direktfügen bezeichnet, wobei es unterschiedliche bekannte Verfahrensschritte gibt, mithilfe derer ein thermisches Fügen einer Metall-Kunststoff-Werkstoffpaarung erfolgen kann. Selbstverständlich wird dabei jeweils auch ein gewisser Anpressdruck benötigt, mit Hilfe dessen ein Kunststoff-Verstärkungselement durch thermisches Fügen, welches gemeinhin auch als Aufschweißen bezeichnet wird, praktisch unlösbar mit der Oberfläche eines metallischen Bauelements verbunden wird. Dabei ist das Verstärkungselement aus mehreren Kunststoff-Lagen aufgebaut, von denen nicht jede mit Verstärkungsfasern versehen sein muss. Hierauf wird an späterer Stelle noch näher eingegangen.

Es können neben einem Achsträger auch irgendwelche radanbindende Bauteile in erfindungsgemäßer Weise verstärkt werden. Wie bekannt sind die Räder des Fahrzeugs über hier sog. radanbindende Bauteile letztlich mit der Karosserie des Fahrzeugs verbunden, derart, dass diese auf den Rädern abgestützt. ist. Solche radanbindende Bauteile können neben einem Radträger ein Schwenklager oder Achsschenkel sein, aber auch radführende Lenker wie Längslenker, Querlenker, Zugstrebe oder ein Schwingungsdämpfer, wobei insbesondere ein metallisches Dämpferrohr desselben auf erfindungsgemäße Weise verstärkt sein kann. Auch die vorstehend genannten radanbindenden Bauteile stellen hier Fahrwerks-Bauelemente oder Profilbauteile aus Metall dar, die mit Verstärkungselementen versteift oder verstärkt werden (können). Ein weiteres Beispiel ist ein dem Fachmann bekanntes und üblicherweise sowohl mit einem Achsträger als auch mit der Karosserie des Fahrzeugs lösbar verbundenes sog. Schubfeld, welches einer Versteifung im Fahrwerksbereich eines Kraftfahrzeugs dient und welches ein besagtes metallisches Bauelement mit durch thermisches Fügen bzw. Aufschweißen aufgebrachtem Verstärkungselement ist oder aufweist.

Nochmals auf das besagte thermische Fügen eingehend wird dieses auch als Aufschweißen von Kunststoffmaterial (bzw. Faserverbund-Kunststoffmaterial) auf den metallischen Werkstoff des besagten Kräfte aufnehmenden oder weiterleitenden Bauelements bezeichnet. Eine solche näherungsweise stoffschlüssige Verbindung erfolgt vorzugsweise ohne Verwendung eines weiteren Klebstoffs oder dgl. unter Verwendung des Kunststoffmaterials d.h. der sog. Matrix des faserverstärkten Kunststoffs als Verbindungsmittel insbesondere zwischen den besagten Verstärkungs-Fasern und dem metallischen Bauelement. Anders als beim eigentlichen Schweißen erfolgt dabei selbstverständlich kein Stoffschluss im eigentlichen Sinne, da der metallische Grundwerkstoff des besagten metallischen Bauelements ja nicht aufgeschmolzen wird. Insofern wird genauer ein "Mikroformschluss" (oder Formschluss im Nanobereich) zwischen der Oberfläche des metallischen Bauelements und dem Verstärkungselement, genauer dessen Kunststoff-Matrix geschaffen. Hierfür kann eine Oberflächen-Vorbehandlung des metallischen Grundkörpers, welche gemeinhin auch als Beizen bezeichnet wird, notwendig sein, ebenso wie ggf. eine auf die metallische Oberfläche aufgebrachte Haftvermittlerschicht. Derartige Schichten bieten vorteilhafterweise auch einen Schutz gegen Kontaktkorrosion beispielsweise zwischen Kohlenstoff-Verstärkungsfasern und einer Leichtmetalllegierung. Für das genannte Beizen kann nach einem Reinigungsprozess ein Strukturieren der Metall-Oberfläche im Nano- oder Mikrobereich durchgeführt werden, um beim Verschweißen mit der Kunststoff-Matrix des Verstärkungselements einen Mikroformschluss bilden zu können. Möglich ist auch eine geeignete Plasmavorbehandlung des betroffenen metallischen Bauteil-Abschnitts.

Im übrigen kann zusätzlich zur quasi-stoffschlüssigen Verbindung, welche wie vorstehend erläutert durch Mikro-Formschluss oder Formschluss im Nanobereich gebildet ist, ein Formschluss nach herkömmlichem Verständnis, nämlich ein mit bloßem Auge sichtbarer Formschluss zwischen dem Verstärkungselement und dem besagten metallischen Bauelement vorgesehen sein. Ein solcher Formschluss kann beispielsweise durch Vorsehen von Strukturierungen (= Erhebungen oder Vertiefungen) oder durch Pins oder Stifte oder ähnliches im jeweiligen zu verstärkenden Bauelement gebildet sein.

Für die Verstärkungselemente werden faserverstärkte Bänder (Tapes) verwendet. Diese weisen unidirektional ausgerichtete Verstärkungsfasern auf. Solche Bänder werden auf den besagten metallischen Bauelementen an den entsprechenden Stellen, d.h. insbesondere längs eines Lastpfades (von durch das jeweilige Bauelement zu übertragenden oder aufzunehmenden Kräften) geeignet aufgebracht. Durch Einwirkung von Temperatur und Druck werden mehrere Bänder bzw. Lagen solcher Bänder übereinander liegend untereinander und - soweit es die mit der Oberfläche des metallischen Bauelements in Kontakt kommenden Bänder bzw. Lagen betrifft, mit diesem Bauelement verbunden. Dabei wird das Verstärkungselement insbesondere durch kohlefaserverstärkte oder glasfaserverstärkte oder aramidfaserverstärkte oder naturfaserverstärkte Kunststoffe mit beispielsweise einer thermoplastischen oder duroplastischen Matrix gebildet. (Hingegen kann es sich beim metallischen Werkstoff des erfindungsgemäß verstärkten Bauelements bspw. um eine Aluminiumlegierung oder um Stahl handeln).

Es ist auch eine Kombination aus verschiedenen Faserverbundkunststoff-Halbzeugen - insbesondere mit verschiedenen Fasern - zur Darstellung des Verstärkungselementes möglich. Weiterhin ist es möglich, bspw. zwischen Schichten von faserverstärktem Kunststoff geeignete Zwischenschichten oder allgemein irgendwelche Zusatzschichten aus unverstärktem, d.h. nicht durch Fasern verstärktem Material vorzusehen, bei welchem Material es sich bspw. um ein viskoelastisches Material handeln kann. Solche Zusatzschichten können bspw. zwischen dem (metallischen) Grundkörper des besagten metallischen Bauelements und der ersten aufgebrachten Faserverbundkunststoff-Schicht (= FVK-Schicht) vorgesehen sein und/oder zwischen den einzelnen FVK-Schichten oder an der Oberfläche des Verstärkungselementes. Im letztgenannten Fall kann eine solche Zusatzschicht insbesondere als Schutz gegen äußere Einwirkungen, bspw. Steinschlag, dienen, während in den anderen Fällen neben einer weiter oben bereits genannten Vermeidung von Kontaktkorrosion, d.h. Erzielung einer galvanischen Trennung auch eine Verbesserung der Haftung zwischen verschiedenen Schichten oder Materialen erzielt werden kann. Auch kann eine solche insbesondere elastische Zusatz- oder Zwischenschicht dem Ausgleich unterschiedlicher Wärmeausdehnungen verschiedenere Materialien dienen und eine Dämpfung insbesondere hinsichtlich des akustischen Verhaltens eines erfindungsgemäß verstärkten Bauelements bewirken, aber auch mechanische Schwingungen bedämpfen.

Das durch eine Mehrzahl von übereinander aufgebrachten Bändern, welche ihrerseits eine Vielzahl von unidirektionalen Verstärkungsfasern enthalten, gebildete Verstärkungselement kann auch durch Umwickeln des zu verstärkenden Bauelements gebildet sein. Ein solches Wickeln eines Bandes kann kreuzweise, d.h. sich überkreuzend erfolgen, derart, dass sich die Verstärkungsfasern des mehrfach übereinander liegenden unidirektionalen Bandes mehrfach kreuzen. Bezogen auf eine Längserstreckung des metallischen Bauelements können die Verstärkungsfasern mit dieser abwechselnd, nämlich übereinander liegend gewickelt, beispielsweise einen Winkel in der Größenordnung von 15° und 165° einschließen. Beispielsweise kann die (übereinander liegende) Schichtungsreihenfolge derart gestaltet sein, dass zunächst alle Verstärkungsfasern in einer ersten Richtung (bspw. unter 15°) und danach dann alle Verstärkungsfasern in einer zweiten Richtung (bspw. unter 165°) gewickelt sind; alternativ ist auch eine abwechselnd geänderte Faserorientierung (bspw. 25°, 155°, 15°, 165°, usw.) zur Bildung eines Geflechts möglich. Selbstverständlich sind auch stückweise zusammengesetzte oder nur partielle Umwicklungen möglich und es liegt eine bevorzugte Dicke des durch gewickelte Verstärkungsfasern mit Kunststoffmatrix gebildeten Verstärkungselements in der Größenordnung von 0,3 Millimeter bis 5 mm. Im Falle eines mehrfach umwickelten Bandes, welches selbst beispielsweise eine Dicke im Bereich von 0,1 mm bis 0,3 mm besitzen kann, können somit zwischen 2 und ca. 15 übereinander gewickelte Lagen dieses Bandes vorgesehen sein. Die vorstehend Maßangaben können in gleicher Weise auch dann gelten, wenn das Verstärkungselement nicht durch Umwickeln des besagten metallischen Bauelements gebildet ist, sondern durch Auftragen von sog. "Tapes" gebildet ist. Dabei sind mehrere (bspw. 2 bis 15) Streifen von faserverstärkten Kunststoff-Bändern im Wesentlichen übereinander liegend auf einen zu verstärkenden Oberflächen-Abschnitt eines metallischen Bauelements aufgebracht, ähnlich den bekannten jedoch nur einlagigen kineologischen Tapes in der Sportmedizin am Menschen.

Vorzugsweise wird das Verstärkungselement aus mehreren übereinander aufgebrachten Lagen eines faserverstärkten Bandes gebildet, wobei die Breite des Bandes ("Tapes") in der Größenordnung von 50 Millimetern liegen kann und sich der Anpressdruck in der Größenordnung von 500 bis 1500 Newton je Quadratzentimeter bewegt. Dabei gibt es verschiedene Möglichkeiten zur Durchführung des Verfahrens: Gemäß einer ersten Möglichkeit wird das Band zusammen mit einer nassen, duroplastischen Matrix (Kunststoff-Matrix) aufgetragen. In der zweiten Variante wird eine thermoplastische Matrix verwendet. Das Band umfasst dabei vorimprägnierte Fasern. Vor und/oder während und/oder nach dem Auftragen des Bandes wird das Band erwärmt, so dass die thermoplastische Matrix angeschmolzen wird. Anstatt des vorimprägnierten Bandes kann auch ein Band mit Hybridgarnen verwendet werden. Diese Hybridgarne umfassen die Verstärkungsfasern mit dem thermoplastischen Kunststoff. Auch hier wird das Band vor, während und/oder nach dem Auftragen erwärmt, so dass der thermoplastische Kunststoff der einzelnen Garne angeschmolzen wird. In allen Varianten härtet die Kunststoffmatrix irgendwann aus und verbindet dadurch die Verstärkungsfasern untereinander und stellt - im Falle des Aufliegens auf dem metallischen Bauelement - gleichzeitig die Verbindung zwischen dem Verstärkungselements und dem zu verstärkenden metallischen Bauelement her. Unter anderem zum Korrosionsschutz kann das Verstärkungselement anschließend insbesondere zusammen mit dem an dessen Ränder angrenzenden Material des metallischen Bauelements mit einem Kunststoffmaterial umspritzt werden oder sein.

Nochmals in anderen Worten ausgedrückt wird vorliegend vorgeschlagen, metallische Bauelemente im Fahrwerksbereich eines Kraftfahrzeugs mit faserverstärkten Kunststoff-Elementen, welche insbesondere durch faserverstärkte Kunststoff-Bänder gebildet sind, bedarfsweise zu verstärken. Die Bänder werden auch als "Tapes" bezeichnet. Die Bänder sind ein Verbund-Kunststoff mit einer Endlosfaserverstärkung, die während des Herstellungsprozesses zur Nachbefähigung oder sog. Baukasten-Spreizung, im Rahmen derer der Einsatzbereich eines Baukasten-Bauelements weiter ausgedehnt werden kann, aufgebracht werden bzw. aufgebracht werden können.

Bei dem Herstellungsverfahren wird gemäß einer ersten Methode ein Tape-Legeverfahren (Fiber Placement) angewendet, bei dem die vorimprägnierten, unidirektionalen Bänder unter Einwirkung von Temperatur und Druck direkt auf die Oberfläche des zu verstärkenden metallischen Bauelements aufgebracht werden. Gemäß einer zweiten Methode erfolgt eine getrennte Fertigung von metallischen Profilbauteilen und der Verstärkung (insbesondere Fiber Placement oder Fiber Forge mit Thermoformen, etc.) und ein nachträgliches Verbinden mit dem besagten metallischen Bauelement über thermisches Direktfügen und/oder Kleben und/oder ähnliches. Stets wird der Halt der Tapes bzw. des Verstärkungselementes auf dem metallischen Bauelement über die Haftung zwischen Metall und Kunststoff (durch mehrfach bereits genannten Mikroformschluss) gegebenenfalls auch mit Vorbehandlung des Metalls oder zusätzlichem sichtbaren Formschluss erzielt.

Die Verstärkungselemente können zur Verstärkung spezifischer Lastpfade, wie auch zur großflächigen Verstärkung einer Oberfläche mit einer geeigneten Orientierung der Faserrichtung eingesetzt werden. Es sind die Tapes vorzugsweise von einem Kunststoff, beispielsweise zum Korrosionsschutz oder zur Integration zusätzlicher Funktionen (z.B. Halterungen), überspritzbar. Durch das Aufbringen der Verstärkungselemente, insbesondere durch thermoplastische unidirektionale Bänder, lassen sich neben der Steifigkeit auch die akustischen Eigenschaften durch die Dämpfungseigenschaften des Kunststoffs und Änderung der lokal-dynamischen Steifigkeit des besagten Bauelements (mit Verstärkungselement) gezielt einstellen. Hierdurch lassen sich Fahrwerkskomponenten einfach skalieren, d.h. an unterschiedliche Fahrzeug-Typen anpassen. So kann ein Bauteil durch individuelle Verstärkung mittels der Verstärkungselemente an ein bestimmtes Fahrzeugmodell oder eine Motorisierungsvariante oder Ländervariante angepasst oder auch bei einer allfälligen Änderung befähigt werden. So können beispielsweise in einem Baukastensystem Komponenten vereinheitlicht und anschließend als Synergieteile durch den Einsatz der Verstärkungselemente an das jeweilige Fahrzeugmodell angepasst werden. Die Verstärkungselemente ermöglichen es, Auslegungsfahrzeuge für eine Baukastenkomponente geringer dimensioniert anzusetzen und fehlende Funktionen wie beispielsweise Steifigkeiten für andere Derivate hoch zu skalieren. Über die Anpassbarkeit ist es möglich, mehrere Derivate mit einer einzigen metallischen Basiskomponente (als besagtem Bauelement) abzudecken.

Durch die Reduzierung der nötigen Produktionsvarianten werden die Kosten für Werkzeug und Maschinen sowie der logistische Aufwand reduziert. Durch den Einsatz der Verstärkungselemente lassen sich die Komponenten des Fahrwerks besser an die jeweiligen Ansprüche anpassen. So ist es möglich, durch gezielte Ausnutzung der Anisotropie der Fasern aufgrund der hohen mechanischen Eigenschaften in Faserrichtung Lastpfade gezielt zu unterstützen. Damit kann das Bauteilgewicht weiter optimiert und Materialüberschuss vermieden werden. Ferner erlaubt der Einsatz der aufgebrachten Bänder ein unkompliziertes Anpassen der Fahrwerkskomponenten an irgendeine Veränderung. So können Fertigungsabläufe einfach an vorgegebene Veränderungen oder an andere Komponenten angepasst werden, ohne hohe Kosten für eine Umrüstung der Werkzeuganpassung zu erzeugen.

Weitere Einzelheiten, Merkmale und Vorteile der Erfindung ergeben sich aus der nachfolgenden Beschreibung und den Figuren. Es zeigen:
- Figur 1: einen Hinterachsträger des erfindungsgemäßen Fahrwerks gemäß einem Ausführungsbeispiel,
- Figur 2: einen weiteren erfindungsgemäßen Hinterachsträger in Ansicht von oben und von unten,
- Figur 3: einen Vorderachsträger eines erfindungsgemäßen Fahrwerks
- Figur 4: einen Dreiecks-Querlenker eines erfindungsgemäßen Fahrwerks
- Figur 5: einen 2-Punkt-Lenker eines erfindungsgemäßen Fahrwerks
- Figur 6: ein Schwenklager eines erfindungsgemäßen Fahrwerks in zwei Ansichten,
- Figur 7: einen erfindungsgemäß gestalteten Schwingungsdämpfer.

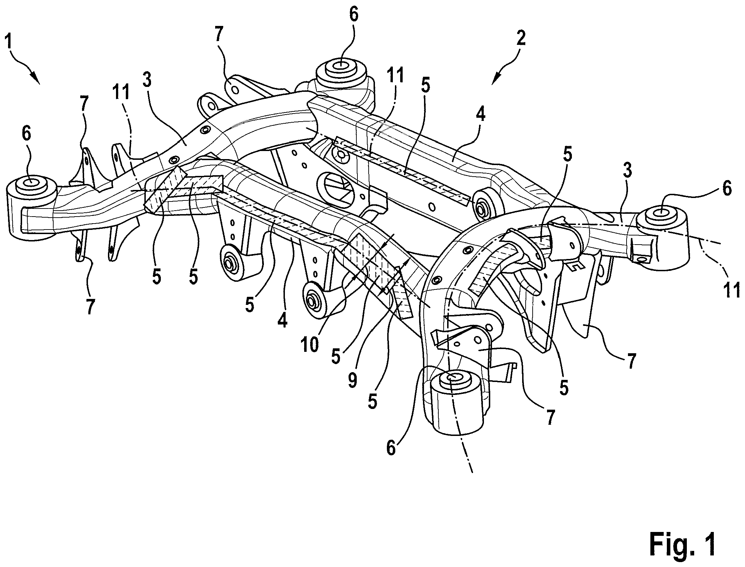

Im Folgenden werden anhand der Figuren 1 bis 7 verschiedene Komponenten eines Fahrwerks 1 eines Kraftfahrzeugs beschrieben, welche jeweils metallische Bauelemente aufweisen oder sind, welche in erfindungsgemäßer Weise durch ein aus faserverstärktem Kunststoff bestehendes und durch thermisches Fügen auf die metallische Bauelement-Oberfläche aufgebrachtes Verstärkungselement 5 mechanisch verstärkt sind.

Figur 1 zeigt einen Achsträger 2, genauer Hinterachsträger, des Fahrwerks 1. Gemäß Figur 1 umfasst der Achsträger 2 zwei Längsträger 3 und zwei Querträger 4, die die beiden Längsträger 3 miteinander verbinden. An dem Achsträger 2 gibt es zumindest vier Karosserieanbindungspunkte 6. Über diese Karosserieanbindungspunkte 6 wird der Achsträger 2 mit einer nicht dargestellten Karosserie des Kraftfahrzeuges verbunden.

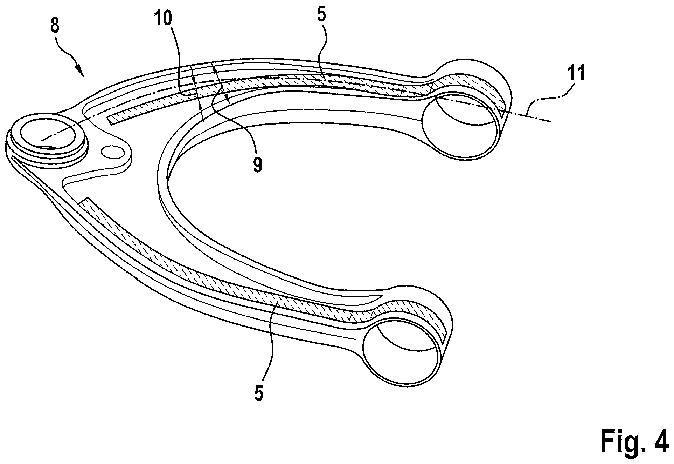

Seitlich an den Längsträgern 3 sind Radanbindungspunkte 7 ausgebildet. An diesen Radanbindungspunkten 7 werden radanbindende Bauteile, wie beispielsweise ein Querlenker 8 aus Fig.4, befestigt. Diese radanbindenden Bauteile verbinden das nicht gezeigte und wie üblich auf einem Radträger drehbar gelagerte Fahrzeug-Rad quasi mit dem Achsträger 2 bzw. der Fzg.-Karosserie.

Der Achsträger 2 ist aus Metall, beispielsweise Aluminium oder Stahl gefertigt. Für lokale Versteifungen sowie ggf. zur Anpassung der akustischen Eigenschaften sind im gezeigten Ausführungsbeispiel auf den Querträgern 4 und den Längsträgern 3 mehrere erfindungsgemäße Verstärkungselemente 5 aufgebracht. Diese Verstärkungselemente 5 sind jeweils Bänder aus mit Kunststoff imprägnierten unidirektionalen Verstärkungs-Fasern. Durch Einwirkung von Temperatur und Druck wurde die Kunststoff-Matrix der Bänder entsprechend verschmolzen, wobei gleichzeitig auch eine ausreichend feste Verbindung (nach Art eines Mikroformschlusses oder Formschlusses im Nanobereich) mit dem jeweiligen metallischen Bauelement, nämlich dem Längsträger 3 bzw. dem Querträger 4 entstand.

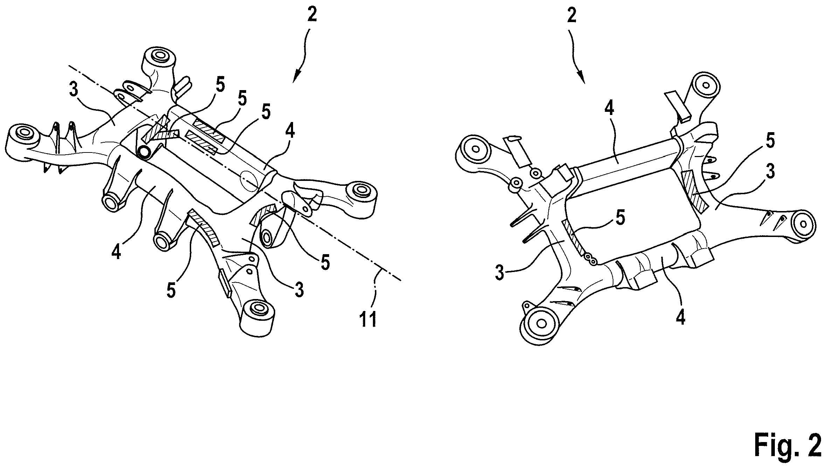

Figur 2 zeigt in zwei Ansichten ebenfalls einen Achsträger 2 (Hinterachsträger) mit kurzen Verstärkungselementen 5 zur lokalen Versteifung am Längsträger 3 und/oder Querträger 4. An einem Hinterachsträger dienen die Verstärkungselemente 5 auch der Verbesserung der akustischen Eigenschaften, insbesondere bezüglich der Übertragung der Anregung eines am Hinterachsträger befestigten Hinterachsgetriebe des Kraftfahrzeugs.

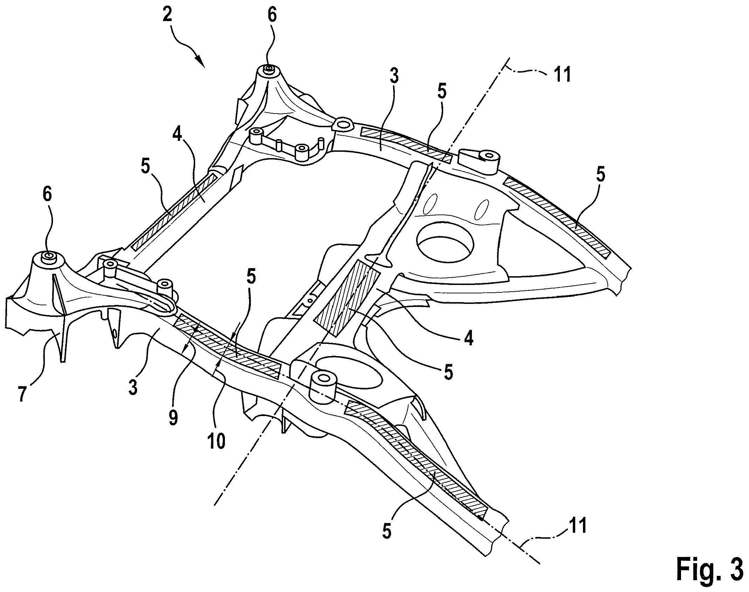

Figur 3 zeigt eine Ausbildung des Achsträgers 2 als Vorderachsträger. Wie beim Hinterachsträger können auch beim Vorderachsträger die Längsträger 3 und die Querträger 4 mit erfindungsgemäßen Verstärkungselementen 5 lokal versteift sein. An einem Vorderachsträger dienen die Verstärkungselemente 5 insbesondere der Skalierung der mechanischen Eigenschaften wie Steifigkeit oder Festigkeit, des akustischen Übertragungsverhaltens oder des Crashverhaltens des Kraftfahrzeugs.

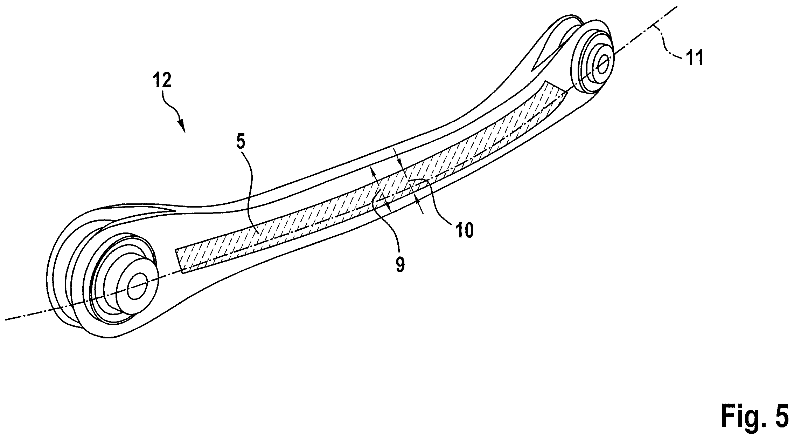

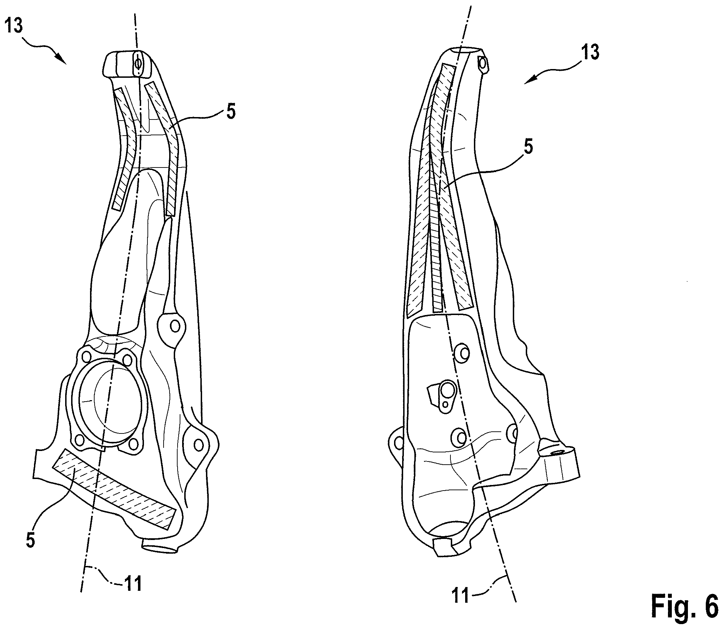

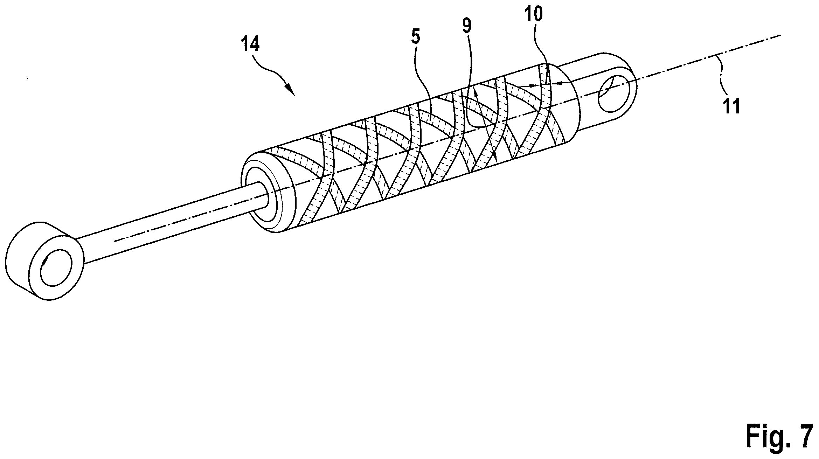

Die Figuren 4 bis 7 zeigen Beispiele von radanbindenden Bauteilen, so einen Dreiecks-Querlenker 8 (Fig.4), einen 2-Punkt-Lenker 12 (Fig.5), der bspw. als Längslenker zum Einsatz kommen kann, ein Schwenklager 13 (Fig.6) und einen Schwingungsdämpfer 14 (Fig.7). Diese Bauteile bzw. Bauelemente 8, 12, 13, 14 bestehen aus einem metallischen Werkstoff und sind mit erfindungsgemäßen Verstärkungselementen 5 aus faserverstärktem Kunststoff verstärkt. Beim Schwingungsdämpfer 14 ist dessen Dämpferrohr mit Verstärkungselementen 5 außenseitig umwickelt.

An den Lenkern 8, 12 und dem Schwenklager 13 dienen die Verstärkungselemente 5 insbesondere der Skalierung der mechanischen Eigenschaften, z.B. Steifigkeit, Festigkeit und Versagenslast. Am Dämpfer 14 dienen die Verstärkungselemente 5 insbesondere der Erhöhung des Berstdrucks, welcher z.B. für Hindernisüberfahrten des Fahrzeugs ausschlaggebend ist.

Die verstärkten Profilbauteile 3, 4, 8, 12, 13, 14 des Fahrwerks 1 weisen jeweils eine Längsrichtung 11 auf. Die Verstärkungselemente 5 und somit auch deren unidirektionalen Fasern sind entweder parallel oder geneigt zur Längsrichtung 11 angeordnet. So findet sich am Dämpferrohr des Schwingungsdämpfers 14 sowie oder am Achsträger 2 am Übergang zwischen Längsträger 3 und Querträger 4 eine geneigte Anordnung, wobei die Neigung in der Größenordnung von +/- (0° bis 45°), vorzugsweise 25° bis 65°, bzgl. der Umfangsrichtung des (jeweiligen) Rohres liegt. In den Figuren sind ggf. Stellen ein Bauelement-Durchmesser 9 und eine Bandbreite 10 des Verstärkungselements 5 eingezeichnet. Bevorzugt liegt die Bandbreite 10 bei höchstens 50% des Bauteildurchmessers 9.

## Patentansprüche

1. Verfahren zum Verstärken eines Bauelements eines Kraftfahrzeug-Fahrwerks, welches Kräfte aufnehmende oder weiterleitende Bauelement aus einem metallischen Werkstoff besteht und mit gleichen geometrischen Abmessungen in hinsichtlich ihres Gewichts und/oder ihrer Antriebsleistung verschiedenen Fahrzeug-Typen verbaut ist, und wobei zur Verstärkung auf dessen Oberfläche in zumindest einem einen Lastpfad bildenden Oberflächen-Abschnitt zumindest ein aus faserverstärktem Kunststoff bestehendes Verstärkungselement (5) durch thermisches Fügen aufgebracht ist,
**dadurch gekennzeichnet, dass** als Verstärkungselement (5) mehrere Bänder mit endloser unidirektionaler Verstärkungsfaser übereinanderliegend unter Einwirkung von Temperatur und Anpressdruck aufgebracht werden, wobei zwischen dem dabei nicht aufgeschmolzenen metallischen Werkstoff des Bauelements und dem darauf aufliegenden Band ein Mikroformschluss oder Formschluss im Nanobereich dargestellt wird,
und wobei eine solche Verstärkung an einem Fahrzeug-Typ mit höherem Gewicht und/oder höherer Antriebsleistung aufgebracht wird, jedoch an einem Fahrzeug-Typ mit geringerem Gewicht und/oder geringerer Antriebsleistung überhaupt nicht oder in geringerer Dimensionierung aufgebracht wird.

2. Verfahren nach Anspruch 1, wobei das Bauelement ein Längsträger (3) und/oder Querträger (4) eines Achsträgers (2) oder ein radanbindendes Bauteil zur gelenkigen Anbindung eines Rades des Fahrzeuges an den Achsträger (2) ist.

3. Verfahren nach Anspruch 1 oder 2, wobei das Verstärkungselement (5) auch formschlüssig mit dem besagten Kräfte aufnehmenden oder weiterleitenden Bauelement verbunden wird.

4. Verfahren nach einem der vorhergehenden Ansprüche, wobei das Verstärkungselement (5) auch aus zumindest einer Zusatzschicht aufgebaut wird, deren Material keine Verstärkungsfasern aufweist.

## Claims

1. A method for reinforcing a component of a motor vehicle chassis, which component absorbs or transmits forces and comprises a metallic material and is installed with identical geometrical dimensions in vehicle types that differ in respect of their weight and/or their propulsive power, wherein, in order to reinforce the surface of said component, at least one reinforcement element (5) comprising fibre-reinforced plastic is mounted thereon by thermal joining in at least one surface portion forming a load path,
**characterised in that,** as reinforcement element (5), a plurality of strips with endless unidirectional reinforcement fibres lying one above the other are mounted on the component under the action of temperature and contact pressure, wherein a micro-scale form fit or a nano-scale form fit is provided between the metallic material of the component, which was not melted during the mounting process, and the strip resting thereon,
and wherein a reinforcement of this kind is mounted on a vehicle type of higher weight and/or higher propulsive power, but is not mounted at all, or is provided in a smaller size, on a vehicle type of lower weight and/or lower propulsive power.

2. A method according to claim 1, wherein the component is a side member (3) and/or cross member (4) of an axle support (2) or a wheel-connecting component for articulatedly connecting a wheel of the vehicle to the axle support (2).

3. A method according to claim 1 or 2, wherein the reinforcement element (5) is also connected form-fittingly to said force-absorbing or force-transmitting component.

4. A method according to any one of the preceding claims, wherein the reinforcement element (5) is also constructed from at least one additional layer, the material of which does not contain any reinforcement fibres.

## Revendications

1. Procédé permettant de renforcer un composant de la carrosserie du véhicule, ce composant qui absorbe ou transmet des forces étant réalisé en un matériau métallique et ayant les mêmes dimensions géométriques pour des types de véhicule de poids et/ou de puissance d'entraînement différent(es), et pour permettre un renfort, sur sa surface, dans au moins un segment de surface formant un chemin de charge, au moins un élément de renfort (5) réalisé en un matériau synthétique renforcé par des fibres étant appliqué par assemblage thermique,
**caractérisé en ce qu'**
en tant qu'élément de renfort (5), on applique plusieurs bandes ayant des fibres de renfort sans fin unidirectionnelles, sous l'action de la température et d'une pression de compression, et, entre le matériau métallique non fondu du composant et la bande appliquée sur celui-ci est réalisée une micro-liaison par la forme ou une liaison par la forme dans la plage manométrique, et un tel renfort est appliqué sur un type de véhicule ayant un poids important et/ou une puissance d'entraînement importante, mais toutefois pas ou dans une faible mesure sur un type de véhicule ayant un plus faible poids et/ou une puissance d'entraînement plus faible.

2. Procédé conforme à la revendication 1,
selon lequel le composant est un longeron (3) et/ou une traverse (4) d'un support d'essieu (2) ou un composant de liaison de roue permettant une liaison articulée d'une roue du véhicule avec le support d'essieu (2).

3. Procédé conforme à la revendication 1 ou 2,
selon lequel l'élément de renfort (5) est également relié par une liaison par la forme avec le composant qu'absorbe ou transmet des forces.

4. Procédé conforme à l'une des revendications précédentes,
selon lequel l'élément de renfort (5) est également réalisé à partir d'au moins une couche supplémentaire dont le matériau constitutif ne comporte pas de fibres de renfort.
